# EUROPEAN PATENT APPLICATION

(11) **EP 1 867 611 A1**
(43) Date of publication of application: **19.12.2007**
(21) Application number: 07011233.9
(22) Date of filing: 08.06.2007
(51) Int. Cl.: C03C 1/02, C03B 1/02

(54) **Method for preparing glass**

(30) Priority: 13.06.2006 US 451813
(71) Applicant: Johns Manville, Denver, CO 80202 (US)
(72) Inventor: Bauer, Jon Frederick, Castle Rock Colorado 80108 (US)
(74) Representative: Luderschmidt, Schüler & Partner

(57) **Abstract**

The invention relates to an improved method for preparing glass products, particularly continuous glass filaments. In this invention, the raw materials are treated with an alkaline solution to pre-react the raw material. The alkaline solution can be added to the raw material mixture or can be generated *in situ* by the addition of water to the raw material mixture.

## Description

### TECHNICAL FIELD

The invention relates to a novel method for the manufacture of glass, particularly glass fibers. In the method of the invention, a mixture of raw materials is treated with an alkaline solution to digest or dissolve at least a portion of the silica containing raw materials. The pre-reacted raw material can also be shaped into discrete particles to aid in materials handling. The raw materials are then melted to form a glass using conventional techniques.

### BACKGROUND OF THE INVENTION

Quartz (SiO₂) is a major component of most commercial glass fibers. It is generally introduced into the initial glass patch as a naturally-occurring mineral in the form of sand, flint, or other mined crystalline silica source. It is used principally because of its good regional availability and relatively low cost. For textile or chopped fiber production, quartz can comprise up to about 40 percent by weight of the batch.

Quartz, however, is the most refractory component of many glass batches. As such, it requires the presence of reactive agents such as sources of calcium, sodium or boron in intimate contact with the quartz to provide fluxing to allow the quartz to dissolve in early-forming melts. Even in the presence of such reactive agents, fine quartz crystals often persist which, in turn, can lead to fiber breakout during production. This adds to the cost of fiber production. In addition, fine quartz particles can also convert to cristobalite at melter temperatures. This high temperature form of silica usually resists dissolution resulting in the formation of extremely fine defects that can cause breakout or brittleness in the finished product.

A related problem may also occur when quartz grains persist, but melt out further downstream where temperatures may be cooler. In these situations, high silica viscosity melts are formed which do not mix well in the bulk melt. The result is silica pockets or cords that can either devitrify to form cristobalite or flow directly into the bushing or fiberization orifice where their higher viscosities can result in dramatically increased forming stresses. This again, results in the presences of breakouts and brittleness in the final product.

In addition to quartz, limestone is often used as a source of calcium for glass fiber formation. Limestone, which is essentially calcite (CaCO₃) breaks down to form CaO and CO₂. This endothermic reaction consumes significant amounts of heat which would be otherwise available for maintaining melt temperatures for refining and homogenization of the glass. In addition, the creation of CO₂ leads to the production of foam which retards heat transfer and increases energy consumption.

It would be desirable, therefore, to either increase the dissolution of quartz or to reduce or eliminate the amount of quartz used to produce glass fiber. In addition, it would be desirable to reduce or eliminate the use of limestone to produce glass fiber.

### BRIEF SUMMARY OF THE INVENTION

It has been found that by digesting or pre-reacting at least a portion of the raw materials used to make glass prior to melting, significantly less energy is required to form the glass. In at least one embodiment, the silica present pre-reacts such that the silica enters into the melt phase reducing if not eliminating the production of brittleness and breakouts.

The pre-reacting of the raw materials is accomplished by treating the raw materials with an alkaline solution. This is accomplished by either adding a concentrated alkaline solution to the mixture of raw materials or by generating an alkaline solution from the raw materials themselves. One method for generating the alkaline solution from the mixture involving substituting calcium oxide (lime) for all or part of calcium carbonate in the mixture followed by hydrating the calcium oxide to create an alkaline solution.

The alkaline solution should have a pH of from about 10 to about 14 and should remain in contact with the quartz containing raw material for sufficient time to dissolve or digest at least a portion of the silica present in the mixture. Typically this will be from about 1 to 24 hours depending on such factors as temperature, pressure and the degree of pre-reaction desired.

Hydration of the raw material mixture also causes the raw materials to agglomerate into small particles. These particles can then be fed directly into the glass furnace. Formation of the particles also helps ensure that the pre-reacted raw materials remain in an intimate mixture when they are introduced into the glass furnace.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

Figure 1 is a schematic of the method of the present invention.
Figure 2 is a schematic of an alternate method of the invention.

### DETAILED DESCRIPTION OF THE INVENTION

In the method of the invention, a glass is prepared by first preparing a mixture of standard raw materials used to manufacture glass including at least one silica containing raw material. The mixture is then treated with an alkaline solution with a pH of from about 10 to about 14 for a period of from 1 to 24 hours. The amount of time for the treatment step will vary depending on the nature of the raw materials, the nature of the alkaline solutions, the temperature and pressure used during the treatment step and the amount of pre-reaction desired. In general, the alkaline solution remains in context with the raw materials for sufficient time to insure that at least a portion of the raw materials pre-react. By pre-react, it is meant that the new materials undergo either a chemical or physical change that normally occurs when the raw materials are fired into a glass furnace. These physical and chemical changes include, but are not limited to, release of carbon dioxide from calcium carbonate, reaction of silica materials with aluminum or calcium containing materials and partial melting of the raw materials. The treatment step can also occur with or just before a pelletizing step, where the raw materials are formed into discrete particles such as pellets. The pellets are then fed or transferred into a glass furnace 104, where a molten glass is formed 105. The molten glass is then formed into continuous glass fibers 106 using standard glass forming techniques. The glass formed by this invention is particularly useful in the manufacture of continuous filament glass fibers.

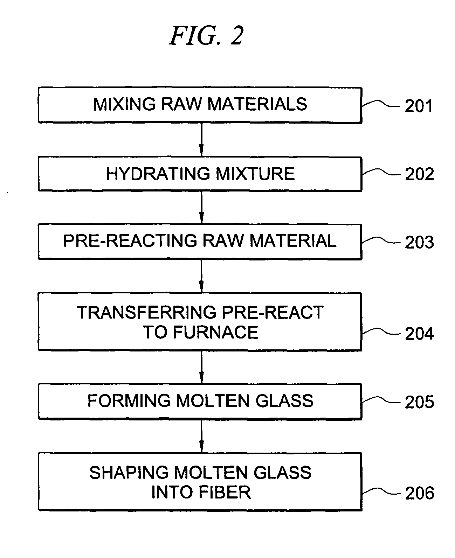

In an alternate embodiment shown in Figure 2, the raw materials are first mixed together 201. The mixture is then hydrated 202 thereby creating an alkaline solution *in situ.* The hydrated mixture is then allowed to pre-react 203 for a period of time of from about 1 to 24 hours. The raw material may also be pelletized at this stage or just before entering the glass furnace. The pre-reacted mixture is then transferred into a glass furnace 204 where the mixture is melted to form a molten glass 205. The molten glass is then formed into a continuous glass fibers using standard glass forming techniques.

Any conventional means may be used to mix and treat the raw materials. In one embodiment, a rotary mixer is used to combine and treat the new material.

The silica containing raw materials useful in the practice of the invention include those silica containing raw materials typically used for glass manufacturing including quartz, sand, diatomaceous earth, clays such as kaolin, volcanic glasses such as pumice, obsidian and the latter, calcium silicate, slags and mixtures thereof. The amount of silica containing raw material will vary from about 20 to about 65 weight percent of the dry raw material mixture.

The mixture also comprises a calcium containing raw material such as calcium carbonate, calcium silicate, calcium oxide, and mixtures thereof, with calcium oxide and mixtures comprising calcium oxide preferred.

Aluminum containing raw materials are also used. These include clays such as kaolin and bentonite. In general, any raw material which supplies calcium, aluminum and/or silica in quantities sufficient to form a glass may be used in the practice of the invention.

At a minimum, the raw material mixture used in the practice of the invention comprises a calcium containing raw material, a silica containing raw material and an aluminum containing raw material. Other raw material such as fluxes (e.g. borates), magnesium containing materials, sodium containing materials and sulphur containing material may be added to the mixtures. A typical mixture used within practice of the invention will have a dry composition within the ranges shown in Table 1:

| Composition | Wt. % Oxide |
|---|---|
| SiO₂ | 25 to 65 |
| Al₂O₃ | 10 to 40 |
| CaO | 20 to 50 |
| B2O₃ | 0 to 8 |
| Na₂O | 0 to 10 |
| MgO | 0 to 5 |
| SO₃ | 0 to 2 |

In one embodiment, the mixtures will have the composition shown in Table 2:

| Composition | Wt. % Oxide |
|---|---|
| SiO₂ | 55 to 65 |
| Al₂O₃ | 10 to 20 |
| CaO | 15 to 25 |
| B₂O₃ | 0 to 8 |
| Na₂O | 0 to 10 |
| MgO | 0 to 5 |
| SO₃ | 0 to 2 |

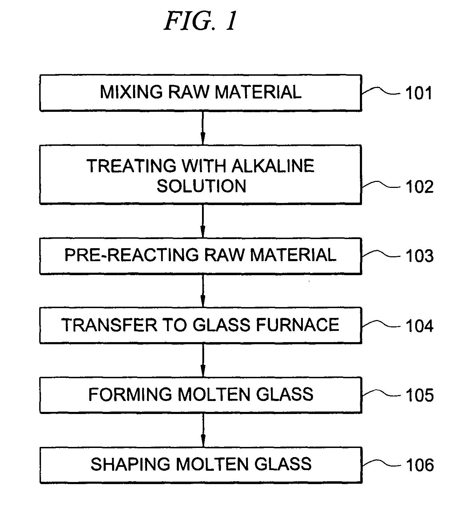

As shown in Figure 1, once the mixture is formed 101, it is then treated with an alkaline solution 102 which dissolves or digests at least a portion of the silica containing raw material in a pre-reacting step 103. The alkaline solution can than be added to the raw material mixtures as shown in Figure 1 or can be created by the hydration of one or more raw materials to create an alkaline solution as shown in Figure 2. As discussed above, the alkaline solution should have a pH of from about 10 to about 14 and in at least one embodiment, should range from about 10 to about 12.

The amount of alkaline solution should be sufficient to cause at part of the raw materials to pre-react material but should not result in the need for significant energy input to drive off any additional water that is added to the mixture. At a minimum, where calcium carbonate is used as a raw material, at least part if not all the carbonate should be dissolved and released from the mixture as carbon dioxide. The amount of water added to the mixture should range from about 25 to about 96 wt % with some embodiments ranging from about 25 to about 50 wt % of the total mixture (dry material plus water). Stated in other terms the ratio of water to dry raw material mixture should range from 3.5 to 25 water to dry mixture. As discussed below, the amount of water added is dependent on such factors as the degree of pre-reaction to be achieved; the temperature and pressure used during the pre-reaction phase and the duration of that phase.

In one embodiment shown in Figure 2, the alkaline solution is created by hydrating the raw material mixture 202. In this embodiment, calcium oxide is used as at least a partial substitute for calcium carbonate, a traditional raw material for glass. In one embodiment, the calcium oxide comprises from about 20 to about 50 wt % of the dry mixture. In yet another embodiment, a reactive glass such as steel slag or the like may be used as a practical replacement for the calcium oxide as well as the silica containing raw materials. The reactive glass is used in an amount of from about 1 to about 50 wt % of the total batch.

When an alkaline solution is created *in situ* by hydrating the mixture to create an alkaline solution, sufficient water should be added to hydrate the lime and generate sufficient alkaline solution to wet the individual particles of the raw material mixture and at least partially digest or dissolve the silica containing raw material. As discussed above, the water sufficient to accomplish this task ranges from about 25 to about 96 wt % with from about 25 to about 50 wt % more typical.

After the alkaline solution has at least partially dissolved the raw material mixture, the pretreated mixture can then be introduced into the melter either as a wet cement or it can be formed into pellets which are then introduced into the melter or furnace. The pellets can be formed using conventional pelletizing technology known to those in the art. The pelletizing step can be accomplished during the pre-reaction or treatment step or can occur subsequent.

While the addition of water to the raw material mixture results in an increase in energy required to make the glass, this is more than compensated for by the substitution of calcium oxide for limestone and by at least partial dissolution of the silica containing raw material. Energy savings of at least 3 to 30% can be achieved through the practice of this invention.

The reaction of alkaline solution with silica or silicate raw materials as described above can be accelerated by increasing the hydrostatic or water pressure of the system. This can be accomplished by performing the reactions in a pressure vessel wherein the raw materials and water are headed to temperatures of from about 25°C to about 250°C. During this process the pressures in the vessel will rise to from about 1 bar to about 40 bars. In addition to affecting the duration of the pre-reaction step, the use of higher pressures and/or higher temperatures will affect the amount of water used during the pre-reaction. Generally, the higher the temperature and/or pressure, less water is needed to achieve the desired degree of pre-reaction.

As discussed above, additional glass raw material such as borates and sulfates may also be added to the raw material mixture. When these additional raw materials are used, the amounts should be minimized to avoid the possibility of lowering the pH of the alkaline solution to a point where silica will not dissolve. For example, for B₂O₃ a level of about 5.0 wt % or less should be used and for Na₂SO₄ less than about 0.1 wt% should be used. Alternatively, the additional raw material can be introduced directly into the glass furnace with the pre-reacted mixture.

### EXAMPLE 1

A pre-reacted "cement" batch material was prepared by initially blending 200 mesh lime (CaO), 325 mesh quartz, 325 mesh kaolin clay, and 200 mesh calcium borate hydrate - colemanite [Ca₂B₆O₈(OH)_{6.2}H₂O] in a rotary drum to form small pellets. The component ratios were 21.7 wt% lime, 41.1 wt.% quartz, 37.2 wt% kaolin, and 6.4 wt% calcium borate hydrate. These aggregates were then allowed to imbibe an amount of water sufficient to create "wet pellets" with a total solids fraction of 0.55. The pellets were then heated in a sealed plastic vessel to 60°C for four hours, removed and cooled to room temperature. The cover was then removed and the pH of the surface of the moist pellets measured with litmus paper. The pellets were then air dried to a moisture content of about 5 wt%. The material was further crushed to a particle size of 150 to mesh, suitable for delivery to a glass furnace, and evaluated by x-ray diffraction and by optical and scanning election microscopy to determine the extent of reaction between the various components in the pellets and physical and makeup of each particle and their form and morphology.

pH measurement indicated that the imbibed fluid (pore fluid) was strongly alkaline (pH = 13) and therefore capable of reacting with at least the surfaces of the quartz and kaolin clay particles. Results from x-ray diffraction indicated that, predictably, all of the lime had reacted to form calcium hydroxide - portlandite [Ca(OH)₂]. However, no evidence of a bulk reaction with either the quartz or the kaolin clay was found. Microscopial analysis of the crushed pellets indicated that calcium hydroxide and calcium borate hydrate formed a dense intergrowth between the quartz and clay particles bringing them in more intimate contact than would have occurred if they were left as a mixed batch material typical of conventional furnace feedstock. This reaction also resulted in the densification of the aggregate, which led to a feedstock which is more reactive in the glass furnace, resulting in faster and lower energy melt out as described in this invention.

### EXAMPLE 2

A pre-reacted "cement" batch material was prepared by initially blending 200 mesh lime (CaO), 325 mesh quartz, and 325 mesh kaolin clay as described in Example 1. The component ratios were 20.1 wt% lime, 42.4 wt% quartz, and 37.5 wt% kaolin. The pellets were then allowed to imbibe an amount of water sufficient to create "wet pellets" with a total solids fraction of 0.70. The wet pellets were then tightly sealed inside a steel vessel and heated to 250°C for four hours, sufficient to bring the pressure of the water vapor to about 40 bars. The vessels were then cooled to room temperature and the contents removed, crushed, and analyzed as described in the previous example. pH of the pellet surfaces was also measured as done previously.

As in the previous example, pH measurement indicated that the imbibed fluid (pore fluid) was strongly alkaline (pH of about 13). X-ray diffraction results showed that in this example, not only did the lime hydrate to form calcium hydroxide, but some of the quartz and clay reacted as well as evidenced by the presence of calcium silicate hydrate - tobermorite and of calcium montmorillonite clay. Microscopical analysis of the crushed pellets showed an even greater densification of the quartz and lime particles than seen in Example 1. This was enhanced by intergrowth of the calcium silicate hydrate that formed an intergranular phases which bonded the residual quartz and clay particles together. This cement-forming reaction brought the calcium and silica source particles (lime and quartz) in very close contact and caused some reaction between them at a molecular level. This pre-reaction of calcium and silica and of calcium and boron oxides illustrates the desirable reactions described in this invention.

The melting and refining of the treated raw material mixture is performed in a glass production furnace using typical glass production methods and conditions. No particular method of additions or mixing or order thereof is required. The resultant melt can be processed in the furnace to produce a glass composition. The glass composition can then be processed to produce the desired end product. For example, for glass fiber, conventional glass fiber spinning technology can be employed. One advantage achieved by the method of the present invention is the use of significantly less heat to obtain an uniform melt.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for preparing glass comprising:
preparing a mixture of raw materials;
treating said mixture with an alkaline solution;
pre-reacting the raw materials;
melting the pre-reacted raw materials to form a molten glass.

2. The method of claim 1 wherein the mixture of raw material comprises a silica containing raw material.

3. The method of claim 1 wherein the pre-reacting step is performed at a temperature of from about 25 to 250°C.

4. The method of claim 1 wherein the pre-reacting step is performed at a water pressure of from about 1 to about 40 bars.

5. The method of claim 1 further comprising the step of pelletizing the mixture of raw materials before melting the raw materials.

6. The method of claim 1 further comprising the step of forming the molten glass into continuous glass fibers.

7. A method for forming a glass comprising:
forming a raw material mixture hydrating the mixture to form an alkaline solution;
pre-reacting the raw material mixture;
melting the raw material mixture to form a molten glass.

8. The method of claim 7 wherein the hydration step is performed by adding 25 to 96wt% water to the raw material mixture.

9. The method of claim 7 wherein said raw material mixture comprises calcium oxide.

10. The method of claim 7 wherein said pre-reacting step is performed at a temperature of from about 25 to about 250°C.

11. The method of claim 7 where said pre-reacting step is performed at a water pressure of from about 1 to about 40 bars.

12. The method of claim 7 wherein said pre-reacting step is performed at a pH of from about 11 to about 14.

13. The method of claim 7 further comprising the step of pelletizing the pre-reacted raw material mixture.

14. The method of claim 7 further comprising the step of forming the molten glass into continuous glass fibers.

15. A raw material mixture for preparing continuous glass fibers comprising:
about 4 to about 75wt% of a dry raw material mixture and 25 to about 96wt% water;
wherein said dry raw material mixture comprises:
about 25 to about 65 wt% SiO₂;
about 10 to about 40 wt% Al₂O₃;
about 20 to about 50 wt% CaO.

16. The raw material mixture of claim 14 wherein the dry mixture further comprises up to about 8 wt% B₂O₃.

17. The raw material mixture of claim 14 wherein the dry mixture further comprises up to about 10 wt% Na₂O.

18. The raw material mixture of claim 14 wherein the dry mixture further comprises up to about 5 wt% MgO.

19. The raw material mixture of claim 14 wherein the dry mixture further comprises up to about 2 wt% SO₃.

20. A raw material mixture for the manufacture of glass comprising:
4 to 75 wt% dry raw materials and 96 to 25 wt% water;
wherein the dry raw materials comprise
about 25 to about 65 wt% S₁O₂;
about 10 to about 20 wt% Al₂O₃; and
about 15 to about 25 wt% CaO.
